# EUROPEAN PATENT SPECIFICATION

(11) **EP 4 483 239 B1**
(45) Date of publication and mention of the grant of the patent: **14.10.2026**
(21) Application number: 23706369.8
(22) Date of filing: 24.02.2023
(51) Int. Cl.: G02B 6/10, G02F 1/01, G02B 6/26

(54) **METHOD AND APPARATUS FOR DYNAMICALLY CONTROLLING THE COUPLING STATE BETWEEN GUIDED MODES AND PLASMONIC RESONANCES IN A PLASMONIC MULTIMODE OPTICAL FIBER**
VERFAHREN UND VORRICHTUNG ZUR DYNAMISCHEN STEUERUNG DES KOPPLUNGSZUSTANDS ZWISCHEN GEFÜHRTEN MODI UND PLASMONISCHEN RESONANZEN IN EINER PLASMONISCHEN MULTIMODALEN GLASFASER
PROCÉDÉ ET APPAREIL DE COMMANDE DYNAMIQUE DE L'ÉTAT DE COUPLAGE ENTRE DES MODES GUIDÉS ET DES RÉSONANCES PLASMONIQUES DANS UNE FIBRE OPTIQUE MULTIMODE PLASMONIQUE

(30) Priority: 25.02.2022 IT 202200003587
(43) Date of publication of application: 01.01.2025
(73) Proprietor: Fondazione Istituto Italiano di Tecnologia, 16163 Genova (IT); Consejo Superior De Investigaciones Científicas, 28006 Madrid (ES)
(72) Inventor: PISANELLO, Ferruccio, 16163 GENOVA (IT); COLLARD, Liam, 16163 GENOVA (IT); PISANO, Filippo, 16163 GENOVA (IT); BALENA, Antonio, 16163 GENOVA (IT); PISANELLO, Marco, 16163 GENOVA (IT); ZHENG, Di, 16163 GENOVA (IT); DE VITTORIO, Massimo, 16163 GENOVA (IT); MENENDEZ DE LA PRIDA, Liset, 28006 MADRID (ES)
(74) Representative: Vanzini, Christian
(86) International application number: PCT/EP2023/054721
(87) International publication number: WO 2023/161437

(56) References cited:
- EP-B1- 2 756 349
- CN-A- 105 092 536
- CN-A- 111 122 456
- US-A1- 2015 015 879
- DATABASE COMPENDEX [online] ENGINEERING INFORMATION, INC., NEW YORK, NY, US; 7 July 2008 (2008-07-07), DITLBACHER H ET AL: "Coupling dielectric waveguide modes to surface plasmon polaritons", XP002809150, Database accession no. E20083011392402
- DITLBACHER H. ET AL: "Coupling dielectric waveguide modes to surface plasmon polaritons", OPTICS EXPRESS, vol. 16, no. 14, 7 July 2008 (2008-07-07), US, pages 10455, XP055968585, ISSN: 1094-4087, DOI: 10.1364/OE.16.010455
- DATABASE COMPENDEX [online] ENGINEERING INFORMATION, INC., NEW YORK, NY, US; 7 July 2008 (2008-07-07), DITLBACHER H ET AL: "Coupling dielectric waveguide modes to surface plasmon polaritons", XP002807694, Database accession no. E20083011392402
- KWAK JIHYUN ET AL: "Fiber-optic plasmonic probe with nanogap-rich Au nanoislands for on-site surface-enhanced Raman spectroscopy using repeated solid-state dewetting", JOURNAL OF BIOMEDICAL OPTICS, vol. 24, no. 03, 14 March 2019 (2019-03-14), 1000 20th St. Bellingham WA 98225-6705 USA, pages 1, XP093043022, ISSN: 1083-3668, Retrieved from the Internet <URL:https://www.ncbi.nlm.nih.gov/pmc/articles/PMC6975223/pdf/JBO-024-037001.pdf> [retrieved on 20230417], DOI: 10.1117/1.JBO.24.3.037001
- CIZMAR TOMAS ET AL: "Shaping the light transmission through a multimode optical fibre: complex transformation analysis and applications in biophotonics", OPTICS EXPRESS, THE INSTITUTION OF ELECTRICAL ENGINEERS, STEVENAGE, GB, vol. 19, no. 20, 26 September 2011 (2011-09-26), pages 18871 - 18884, XP002705793, DOI: 10.1364/OE.19.018871
- DATABASE COMPENDEX [online] ENGINEERING INFORMATION, INC., NEW YORK, NY, US; 7 July 2008 (2008-07-07), DITLBACHER H ET AL: "Coupling dielectric waveguide modes to surface plasmon polaritons", XP002809344, Database accession no. E20083011392402
- OPTICS EXPRESS 20080707 OPTICAL SOCIETY OF AMERICA (OSA) USA, vol. 16, no. 14, 7 July 2008 (2008-07-07), pages 10455 - 10464, DOI: 10.1364/OE.16.010455

## Description

The project leading to this application has received funding from the European Union's Horizon 2020 research and innovation programme under grant agreement No. 828972 (nano-BRIGHT).

The present invention relates to a method and apparatus for controlling the coupling state between guided modes and plasmonic resonances in a plasmonic multimode optical fiber, said plasmonic multimode optical fiber comprising an input facet, an output facet and a plasmonic structure formed on the output facet.

The ability to realize plasmonic structures on the output facet of multimode optical fibers has enabled a set of integrated functionalities, using guided light to exploit the intrinsic properties of either Surface Plasmon Resonances (SPR) or Localized SPR (LSPR). Enhanced sensing, near-field optical microscopy, high-efficiency second-harmonic generation, plasmonic lab-on-fiber, and integrated phase shift/beam steering are primary examples of those promising applications. Still, the pivotal point of achieving full control over the photonic properties of the entire optical system in both static dynamic fashions remains unsolved.

Micro- and nano-fabrication and electromagnetic engineering indeed cannot account for the intrinsic complexity of the fiber transmission. In fact, the fiber is a highly turbid medium that substantially alters the propagation of light wavefronts up to the point that any initial spatial coherence is practically lost. Although using single mode fibers allows circumventing this problem, this comes at the cost of a limited control on the resonant patterns at the output facet, which are almost completely determined by the structural morphology. Instead, harnessing the interaction between plasmonic modes on the fiber tip and the full set of modes guided in a multimode fiber (MMF) can bring this technology to achieve its full potential.

EP2756349A2 discloses a holographic interferometric method for controlling light transmission through a multimode optical fiber in which, however, no plasmonic structure is taken in account. Plasmonic structures insert an additional layer of complexity to light propagation, making conduction electrons interacting with the light field and defining a dispersion diagram that features resonances. In addition, the plasmonic structure features sub-wavelength features, in all spatial dimensions, that play a crucial role in its response. Therefore, optical propagation rules through a generic medium (either scattering, turbid, homogeneous or not, absorbing or transparent) are insufficient to describe the physics of the coupled system composed by guided modes and plasmonic resonances.

Ditlbacher et al. "Coupling dielectric waveguide modes to surface plasmon polaritons", Optics Express, vol. 16 No. 14, p. 10455, 7 July 2008 describes the study of thin film multilayers used for the coupling of dielectric waveguide modes to surface plasmons. The combination of dielectric waveguide modes for long-range light field propagation and SPP elements enabling highly confined local light field manipulation. This paper introduces a hybrid waveguide system built from a metal-clad dielectric waveguide and a metal interface and analyzes its properties in terms of an extended layer system.

Čižmár et al. "Shaping the light transmission through a multimode optical fiber: complex transformation analysis and applications in biophotonics", Optics Express, vol. 19 No. 20, p. 18871, 26 September 2011 discloses laser light propagation through multimode optical fibers and light control at the fiber output. Beam-shaping with a spatial light modulator obtains a decomposition of the initial laser field into a series of orthogonal modes each corresponding to a different square region (sub-domain) of the SLM. A "reference mode" and a "test mode" propagating on optical fibers, interfere with output fiber facet, and the result signals of amplitude are observed in CCD camera. Subsequently, the amplitude evolution is recorded varying the phase of "test mode". Repeating this procedure for all the input modes and then turning them 'on' simultaneously with the optimal phase results in optimum focusing of the signal.

Kwak et al. "Fiber-optic plasmonic probe with nanogap-rich Au nanoislands for onsite surface-enhanced Raman spectroscopy using repeated solidstate dewetting", Journal of Biomedical Optics 24(3), 037001, 14 March 2019 describes a system made by a fiber-optic plasmonic probe for on-site SERS analysis. In particular, a multimode fiber with plasmonic nanoislands on top surface, molded with a solid-state dewetting technique. The system consists in an excitation laser coupled through the end of the multimode fiber with small biomolecules attached near the SERS-active fiber-top surface. The same fiber collects the signals, and then comes back to a spectrometer for the analysis.

L. Collard et al. "Wavefront engineering for controlled structuring of far-field intensity and phase patterns from multimodal optical fibers", APL Photonics 6, 051301, 4 May 2021 discloses an adaptive optic method used to perform complex far-field structuring of the emission of a MMF, based on a phase modulation using a spatial light modulator at the input of a multimode fiber to generate multiple, low divergence rays with controlled angles and phase at the fiber output.

US 2015/0015879 A1 discloses a multimode-fiber imaging system in which wavefront shaping is used to compensate for modal scrambling and dispersion, after calibration of the multimode waveguide, so as to generate a desired distal light pattern from a phase pattern applied at the proximal end. The document further teaches collecting optical information through the same multimode waveguide in order to reconstruct an image, in particular for endoscopic and high-resolution imaging applications.

An aim of the invention is to provide a method and related apparatus allowing a dynamic and selective control of the coupling between multimodal optical fiber guided modes and the resonances of plasmonic structures realized on the output facet of a plasmonic multimode optical fiber.

In accordance with this aim, the invention proposes a method for dynamically controlling the coupling state between guided modes and plasmonic resonances in a plasmonic multimode optical fiber, said plasmonic multimode optical fiber comprising an input facet, an output facet and a plasmonic structure formed on the output facet, wherein the method comprises the steps of:
a) providing a set of phase modulation components ${ϕ}_{interfere}^{{j}_{x} , {j}_{y} , p} \left({u}_{in}, {v}_{in}\right)$ to be applied to an input light field entering the input facet of the plasmonic multimode optical fiber, each phase modulation component ${ϕ}_{interfere}^{{j}_{x} , {j}_{y} , p} \left({u}_{in}, {v}_{in}\right)$ causing an associated near field intensity distribution of the electromagnetic field on the plasmonic structure *NF^{jₓ,j_{y},p}*(*xₒᵤₜ, yₒᵤₜ*) and an associated angular radiative pattern after the output facet of the plasmonic multimode optical fiber measured by the far field image *FF^{jₓ,j_{y},p}*(*uₒᵤₜ, vₒᵤₜ*);
b) determining a computed phase modulation Φ(*uᵢₙ*, *vᵢₙ*) to be applied to the input light field to produce coupling between guided modes and plasmonic resonances, defined by a target intensity distribution of the electromagnetic field on the plasmonic structure and/or a target angular radiative pattern after the output facet of the plasmonic multimode optical fiber, said computed phase modulation being defined as a combination of the phase modulation components ${ϕ}_{interfere}^{{j}_{x} , {j}_{y} , p} \left({u}_{in}, {v}_{in}\right)$*,* wherein said combination of the phase modulation components is computed based on the near field intensity distributions *NF^{jₓ,j_{y},p}*(*xₒᵤₜ, yₒᵤₜ*) or far field images *FF^{jₓ,j_{y},p}*(*uₒᵤₜ, vₒᵤₜ*) associated to the phase modulation components ${ϕ}_{interfere}^{{j}_{x} , {j}_{y} , p} \left({u}_{in}, {v}_{in}\right)$ and the target intensity distribution and/or target angular radiative pattern, said near field intensity distributions *NF^{jₓ,j_{y},p}*(*xₒᵤₜ, yₒᵤₜ*) or far field images *FF^{jₓ,j_{y},p}*(*uₒᵤₜ, vₒᵤₜ*) being analysed to calculate, for each point (*jₓ, j_{y}*) of an array of points on said input facet (11), phase shifts $p = {p}_{opt}^{{j}_{x} , {j}_{y}}$ that generate said target intensity distribution or said target angular radiative pattern, over an ensemble of targeted pixels in an image plane of the output facet (12) or in a Fourier plane of the output facet (12), respectively; and
c) applying the computed phase modulation *ϕ*(*uᵢₙ, vᵢₙ*) to a laser beam entering the input facet of the plasmonic multimode optical fiber, said laser beam having a wavelength chosen to match specific resonant wavelengths of the plasmonic structure;

wherein the near field intensity distributions *NF^{jₓ,j_{y},p}*(*xₒᵤₜ, yₒᵤₜ*) or far field images *FF^{jₓ,j_{y},p}*(*uₒᵤₜ*, *vₒᵤₜ*) associated to the phase modulation components ${ϕ}_{interfere}^{{j}_{x} , {j}_{y} , p} \left({u}_{in}, {v}_{in}\right)$*vᵢₙ*) are determined in a plasmonic mode phase measurement step, said plasmonic mode phase measurement step comprising:
   - causing a reference beam and a scanning beam to enter the input facet of the multimode optical fiber, wherein the reference beam has a phase modulation pattern *ϕ_{ref}*(*uᵢₙ, vᵢₙ*),
where (*uᵢₙ*, *vᵢₙ*) are coordinates in the Fourier plane of the input facet, and the scanning beam sequentially impinges on the array of points on the input facet and has a phase modulation pattern ${ϕ}_{scan}^{{j}_{x} , {j}_{y} , p} \left({u}_{in}, {v}_{in}\right)$ where (*jₓ, j_{y}*) are array indexes and p is a discretized phase shift ranging from 0 to 2*π*, wherein the reference beam and scanning beam propagate through the multimode optical fiber, interfere with each other and excite plasmonic modes on the output facet, thereby generating the near field intensity distributions *NF^{jₓ,j_{y},p}*(*xₒᵤₜ, yₒᵤₜ*) and far field images *FF^{jₓ,j_{y},p}*(*uₒᵤₜ*, *vₒᵤₜ*) associated to the phase modulation components, respectively in the image plane of the output facet and in the Fourier plane of the output facet.

In the present disclosure, the "intensity distribution of the electromagnetic field on the plasmonic output facet" is intended as the spatial and temporal distribution of intensity of the radiative electromagnetic field as modulated by the plasmonic structures at a distance measurable within a few units of the excitation wavelength of the laser beam. In particular, such a distance may be less than 5 units of the excitation wavelength.

The "angular radiative pattern after the output facet of the plasmonic multimode optical fiber" is intended as the spatial and temporal distribution of intensity of the radiative electromagnetic field as modulated by the plasmonic structures at a distance that is significantly larger than the excitation wavelength. In particular, such a distance may be greater than 5 and up to 10⁴ units of the excitation wavelength.

A further object of the invention is an apparatus for dynamically controlling the coupling state between guided modes and plasmonic resonances in a plasmonic multimode optical fiber, said plasmonic multimode optical fiber comprising an input facet, an output facet and a plasmonic structure formed on the output facet, wherein the apparatus comprises:
a wavefront shaping device configured to phase-modulate the wavefront of a wavelength tunable laser beam,
a microscope objective optically conjugated with the wavefront shaping device and configured to focus the modulated wavefront on the input facet of the plasmonic multimode optical fiber,
a spatially resolved detectors arrangement optically conjugated with the output facet of the plasmonic multimode optical fiber, said detecting arrangement comprising a first detector configured to image the intensity distribution of the electromagnetic field on the output facet and a second detector configured to image the far field response of the output facet, and
a control unit configured to
   a) store a set of phase modulation components ${ϕ}_{interfere}^{{j}_{x} , {j}_{y} , p} \left({u}_{in}, {v}_{in}\right)$ to be applied to an input light field entering the input facet of the multimode optical fiber, each phase modulation component ${ϕ}_{interfere}^{{j}_{x} , {j}_{y} , p} \left({u}_{in}, {v}_{in}\right)$ causing the light field to generate an associated near field intensity distribution *NF^{jₓ,j_{y},p}*(*xₒᵤₜ, yₒᵤₜ*) of the electromagnetic field on the plasmonic structure and an associated angular radiative pattern *FF^{jₓ,j_{y},p}*(*uₒᵤₜ, vₒᵤₜ*) after the output facet of the plasmonic multimode optical fiber on the spatially resolved detectors arrangement;
   b) determine a computed phase modulation Φ(*uᵢₙ*, *vᵢₙ*) to be applied to the input light field to produce coupling between guided modes and plasmonic resonances, defined by a target intensity distribution of the electromagnetic field on the plasmonic structure and/or a target radiative pattern after the output facet of the plasmonic multimode optical fiber on the spatially resolved detectors arrangement, said computed phase modulation being defined as a combination of the phase modulation components ${ϕ}_{interfere}^{{j}_{x} , {j}_{y} , p} \left({u}_{in}, {v}_{in}\right)$, wherein said combination of the phase modulation components is computed based on the near field intensity distributions *NF^{jₓ,j_{y},p}*(*xₒᵤₜ, yₒᵤₜ*) or far field images *FF^{jₓ,j_{y},p}*(*uₒᵤₜ, vₒᵤₜ*) associated to the phase modulation components ${ϕ}_{interfere}^{{j}_{x} , {j}_{y} , p} \left({u}_{in}, {v}_{in}\right)$ and the target intensity distribution and/or target angular radiative pattern, said near field intensity distributions *NF^{jₓ,j_{y},p}*(*xₒᵤₜ, yₒᵤₜ*) or far field images *FF^{jₓ,j_{y},p}*(*uₒᵤₜ*, *vₒᵤₜ*) being analysed to calculate, for each point (*jₓ, j_{y}*) of an array of points on said input facet (11), phase shifts $p = {p}_{opt}^{{j}_{x} , {j}_{y}}$ that generate said target intensity distribution or said target angular radiative pattern, over an ensemble of targeted pixels in an image plane of the output facet or in a Fourier plane of the output facet, respectively; and
   c) control the wavefront shaping device to apply the computed phase modulation Φ(*uᵢₙ*, *vᵢₙ*) to the laser beam, said laser beam having a wavelength chosen to match specific resonant wavelengths of the plasmonic structure;
wherein the near field intensity distributions *NF^{jₓ,j_{y},p}*(*xₒᵤₜ, yₒᵤₜ*) or far field images *FF^{jₓ,j_{y},p}*(*uₒᵤₜ*, *vₒᵤₜ*) associated to the phase modulation components ${ϕ}_{interfere}^{{j}_{x} , {j}_{y} , p} \left({u}_{in}, {v}_{in}\right)$ are determined in a plasmonic mode phase measurement step, said plasmonic mode phase measurement step comprising:
   - causing a reference beam and a scanning beam to enter the input facet of the multimode optical fiber, wherein the reference beam has a phase modulation pattern *ϕ_{ref}*(*uᵢₙ, vᵢₙ*),
where (*uᵢₙ*, *vᵢₙ*) are coordinates in the Fourier plane of the input facet, and the scanning beam sequentially impinges on the array of points on the input facet and has a phase modulation pattern ${ϕ}_{scan}^{{j}_{x} , {j}_{y} , p} \left({u}_{in}, {v}_{in}\right)$, where (*jₓ, j_{y}*) are array indexes and *p* is a discretized phase shift ranging from 0 to 2*π*, wherein the reference beam and scanning beam propagate through the multimode optical fiber, interfere with each other and excite plasmonic modes on the output facet, thereby generating the near field intensity distributions or *NF^{jₓ,j_{y},p}*(*xₒᵤₜ, yₒᵤₜ*) and far field images *FF^{jₓ,j_{y},p}*(*uₒᵤₜ*, *vₒᵤₜ*) associated to the phase modulation components, respectively in the image plane of the output facet and in the Fourier plane of the output facet.

The proposed method and apparatus allow to control the coupling state between guided modes and the resonance state of plasmonic structures realized on the distal facet of a multimode optical fiber. The phase of the input wavefront into the plasmonic fiber is controlled with a wavefront shaping element (e.g. a spatial light modulator or a digital micromirror device). The resonances resulting from the interaction between conduction electrons and guided modes are monitored simultaneously in both the intensity distribution of the electromagnetic field on the output facet of the plasmonic multimode optical fiber and the radiative angular response of the plasmonic multimode optical fiber after the output facet. By defining a target optical response in one or both planes the optical system is forced to work in a well-defined coupling state, enabling:
- Control of the workpoint in the dispersion diagram, in both a static and dynamic fashion,
- Spatial-selective activation of near-field enhancement of the plasmonic fiber facet,
- Wavevector encoding and decoding of the interaction between guided and free-space light propagation.

This directly leads to applications in:
- spatially-resolved plasmonic endoscopy by exploiting Surface Enhancement Raman Scattering for molecular sensing,
- spectrally-selective imaging exploiting wave-vector encoding through Extraordinary Optical Transmission.

Advantageously, the plasmonic fiber can feature any type of plasmonic structure on its output facet, since the modulation input field is defined upon a measure of the available photonic states.

Further characteristics and advantages of the proposed device will be presented in the following detailed description, which refers to the attached drawings, provided purely by way of non-limiting example, in which:
- Figure 1 shows the layout of an exemplary apparatus according to the invention;
- Figure 2 is an enlarged view of a plasmonic multimode optical fiber of the apparatus of Figure 1;
- Figure 3 is a further enlarged view of an output facet of the fiber of Figure 2;
- Figure 4 shows a phase pattern denoted ${ϕ}_{interfere}^{{j}_{x} , {j}_{y} , p} \left({u}_{in}, {v}_{in}\right)$ in the plane of a spatial light modulator, and able to produce two beams *B_{ref}* and *B_{scan}* in the (*xᵢₙ, yᵢₙ*) plane of the input facet of the fiber, and a computed phase modulation *ϕ*(*uᵢₙ, vᵢₙ*) able to produce a target intensity pattern of the electromagnetic field on the plasmonic output facet or a target far field intensity pattern; and
- Figure 5 shows different applications of the invention (top to bottom): Activation of a sub-portion of a nanohole array for extraordinary optical transmission, wave vector encoding, spatially resolved enhanced sensing.

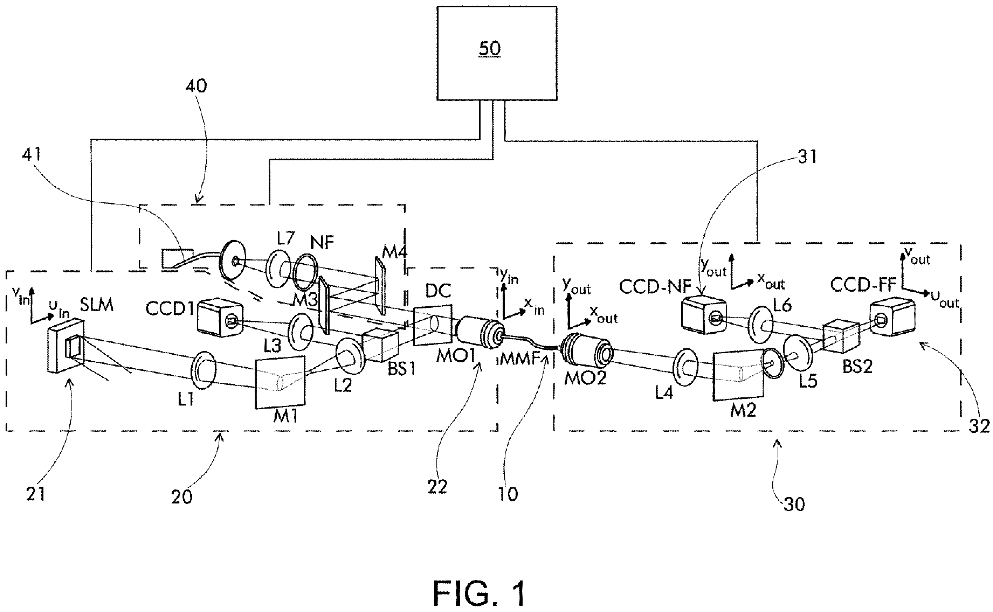

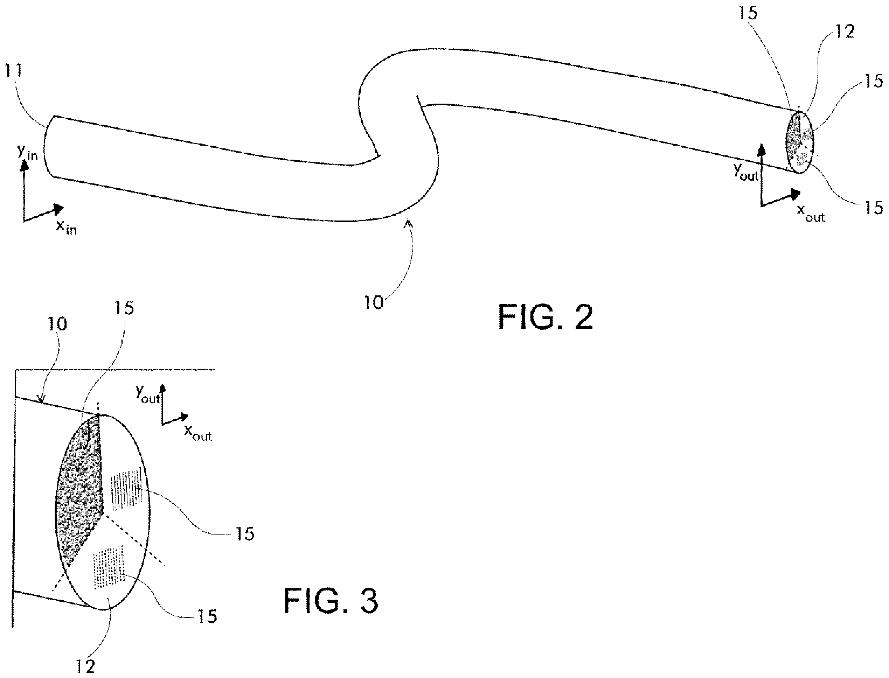

Figure 1 shows the layout of an exemplary apparatus for controlling the optical coupling between guided modes and the resonance state of plasmonic structures realized on the distal facet of a plasmonic multimode optical fiber 10. As shown in Figures 2 and 3, the plasmonic multimode optical fiber 10 comprises an input facet 11, an output facet 12, and a plasmonic structure 15 formed on the output facet 12. In the example shown in the drawings, there are three different plasmonic structures 15, i.e. an array of nanoholes, a nanograting and a pattern of nanoislands. The plasmonic fiber 10 may range from a few centimeters long to several tens of centimeters, and may consists of a step index multimode fiber with plasmonic structures realized on its output facet.

The optical apparatus of Figure 1 allows for controlling the coupling state between guided modes in the plasmonic multimode fiber 10 and the plasmonic structures 15 realized on its output facet 12. The intensity and phase of the input wavefront into the fiber is controlled with a wavefront shaping element (a spatial light modulator or a digital micromirror device) and the response of the coupled system monitored simultaneously in both the near and far-field planes of the distal plasmonic facet together with the backscattered signal emerging from the proximal facet. By defining a target optical response in one or both planes the optical system is forced to work in a well-defined state, enabling:
- Dynamic control of the workpoint in the dispersion diagram
- Spatial-selective activation of near-field enhancement of the plasmonic fiber facet.
- Wavevector encoding and decoding of the interaction with guided light and free-space propagation

This directly leads to applications in spatially-resolved plasmonic endoscopy by exploiting Surface Enhanced Raman Scattering for molecular sensing and Extraordinary Optical Transmission.

The system shown in Figure 1 comprises an excitation block 20, the plasmonic multimode fiber 10, a monitoring block 30 and a collection block 40. These blocks are controlled by a control unit 50. In figure 1, SLM designates a wavefront shaping element, CCD... designates a charge-coupled device, L... designates a lens, M... designates a mirror, BS... designates a beam splitter, MO... designates a microscope objective, DC designates a dichroic mirror and NF designates a notch filter.

The excitation block 20 is configured to send phase-modulated light (or intensity- and phase-modulated light) to the plasmonic fiber 10. A laser beam is expanded to overfill the screen of a phase-modulation element 21 (a spatial light modulator (SLM) or a digital micromirror device (DMD)), optically conjugated with the back aperture of a microscope objective (MO1) 22, focusing the modulated wavefront on the input facet 11 of the plasmonic fiber 10. The laser beam can be either continuous wave or pulsed (either fs, ps or ns), with a fixed wavelength or with a tunable wavelength in both the visible and/or the near-infrared spectral range.

The monitoring block 30 images the plasmonic output facet and its angular radiative response on two different spatially resolved detectors 31, 32 (such as CCD or CMOS cameras).

The collection block 40 collects back-propagating photons into the plasmonic fiber 10, and is employed in applications where light is recollected by the plasmonic structures 15 on the output facet 12. A spectrometer fiber is designated with 41 in Figure 1.

The operation method of the apparatus essentially comprises three different steps: (A) A plasmonic modes measurement step, (B) a computational step and (C) a modulation step.

### (A) Measurements of the phase of the plasmonic modes

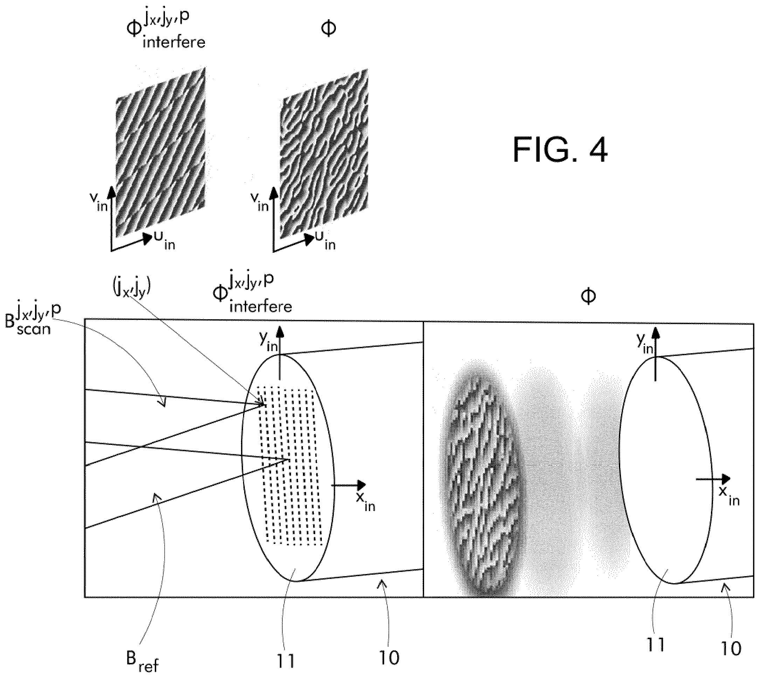

Plasmonic modes excited on the output end of the plasmonic multimode optical fiber 10 are measured when applying a set of phase-modulated input light fields on the proximal end of the fiber ${ϕ}_{interfere}^{{j}_{x} , {j}_{y} , p} \left({u}_{in}, {v}_{in}\right)$, as shown in Figure 4. In the following, we define as (*xᵢₙ, yᵢₙ*) (or (*xₒᵤₜ, yₒᵤₜ*)) the spatial coordinates in the image plane of the input (or output) facet and as (*uᵢₙ*,*vᵢₙ*) (or (*uₒᵤₜ,vₒᵤₜ*)) the coordinates in the Fourier plane of the input (or output) facet (these coordinates are shown in Figures 1 to 4).

The phase modulation in the excitation block 20 is set to a phase pattern denoted ${ϕ}_{interfere}^{{j}_{x} , {j}_{y} , p} \left({u}_{in}, {v}_{in}\right)$ in the plane of the spatial modulator 21, able to produce two beams in the (*xᵢₙ, yᵢₙ*) plane (Figure 4): (i) a reference beam *B_{ref}* generated by a phase *ϕ_{ref}*(*uᵢₙ, vᵢₙ*), which passes into the fiber core, and (ii) a scanning beam *B_{scan}* that sequentially impinges on a *n* × *m* array of points (indexed by *jₓ* and *j_{y}*) on the input facet 11 of the fiber 10 with phase *p* ranging from 0 to 2π; every scanning beam on the input facet is indexed as ${B}_{scan}^{{j}_{x} , {j}_{y} , p}$ and is generated by the phase mask ${ϕ}_{scan}^{{j}_{x} , {j}_{y} , p} \left({u}_{in}, {v}_{in}\right)$ (Figure 4). The phase modulation applied to the excitation block 20 results as: ${ϕ}_{interfere}^{{j}_{x} , {j}_{y} , p} \left({u}_{in}, {v}_{in}\right) = arg \left(exp\left({iϕ}_{scan}^{{j}_{x} , {j}_{y} , p}\left({u}_{in}, {v}_{in}\right)\right)+exp\left({iϕ}_{ref}\right)\right)$ (1) where *p* represents the phase shift applied to the scanning points. By iterating on (*jₓ, j_{y}*) for a total of *n* × *m* points, ${B}_{scan}^{{j}_{x} , {j}_{y} , p}$ is scanned across the input facet while keeping *B_{ref}* at the center of the core. For each (*jₓ, j_{y}*), *p* is incremented in steps of $\frac{π}{2}$ in the range [0, 2π] for a total of *P* = 4 phase steps.

In this way, the propagation of ${B}_{scan}^{{j}_{x} , {j}_{y} , p}$ and *B_{ref}* through the plasmonic multimode fiber 10 generates an interference pattern that, in turn, excites plasmonic modes on the output facet 12, which is then reflected in the light field structuring in both (*xₒᵤₜ,yₒᵤₜ*) and (*uₒᵤₜ,vₒᵤₜ*) planes (CCD-NF and CCD-FF, in practical terms). The plasmonic modes can be fully defined only if light intensity patterns on both (*xₒᵤₜ,yₒᵤₜ*) and (*uₒᵤₜ,vₒᵤₜ*) planes are measured simultaneously. The system is run in all possible configurations of the triplet (*jₓ, j_{y}, p),* for a total of *n* × *m* × 4 iterations, and the images recorded by the detectors 31 and 32 saved and used in the computational step disclosed below. These images are hereafter referred to as *FF^{jₓ,j_{y},p}*(*uₒᵤₜ*, *vₒᵤₜ*) and *NF^{jₓ,j_{y},p}*(*xₒᵤₜ, yₒᵤₜ*), respectively. Therefore, in the measurement step *n* × *m* × *P* phase modulation components ${ϕ}_{interfere}^{{j}_{x} , {j}_{y} , p} \left({u}_{in}, {v}_{in}\right)$ and related *n* × m × *P* near field images *NF^{jₓ,j_{y},p}*(*xₒᵤₜ,yₒᵤₜ*) and *n* × m × *P* far field images *FF^{jₓ,j_{y},p}*(*uₒᵤₜ*, *vₒᵤₜ*) are generated. These phase modulation components and the related images can be stored in a memory of the control unit 50. Step (A) can be repeated at multiple input wavelengths in order to match with specific resonant wavelengths or the plasmonic structures.

### (B) The computational step

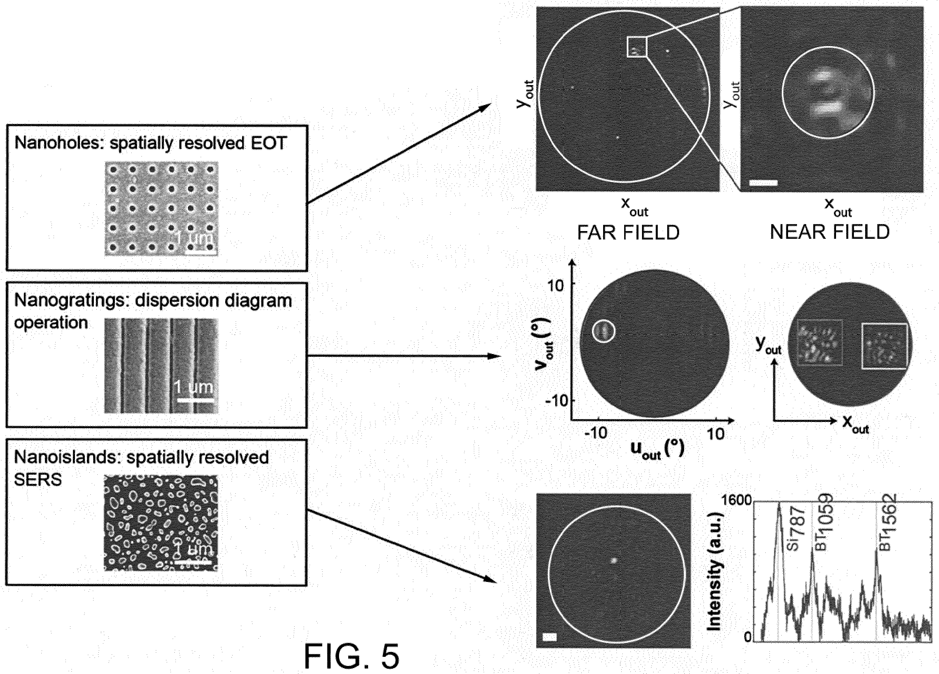

The computational step aims at defining the phase modulation Φ (*uᵢₙ*, *vᵢₙ*) to impress at the input light field to produce a specific intensity pattern (target intensity pattern) on (*xₒᵤₜ,yₒᵤₜ*) and (*uₒᵤₜ,vₒᵤₜ*) (see Figure 4 for an example of Φ and Figure 5 for examples of modulation in the (*xₒᵤₜ,yₒᵤₜ*) or (*uₒᵤₜ,vₒᵤₜ*) planes). This is done in two substeps.

Firstly, the images *FF^{jₓ,j_{y},p}*(*uₒᵤₜ*, *vₒᵤₜ*) and *NF^{jₓ,j_{y},p}*(*xₒᵤₜ, yₒᵤₜ*) are analysed to calculate, for each (*j*_{*x*,} *j_{y}*) the phase shifts $p = {p}_{opt}^{{j}_{x} , {j}_{y}}$ that generate the aimed electromagnetic field intensity and phase on the specific plasmonic structures fabricated on the output facet and on the radiative angular response of the plasmonic multimode fiber after the plasmonic output facet over an ensemble of targeted pixels [(*x'ₒᵤₜ,y'ₒᵤₜ*),(*x"ₒᵤₜ,y"ₒᵤₜ*),...] and [(*u'ₒᵤₜ,v'ₒᵤₜ*),(*u"ₒᵤₜ,v"ₒᵤₜ*),...]. This results in *n* × *m* triplets $\left({j}_{x}, {j}_{y}, {p}_{opt}^{{j}_{x} , {j}_{y}}\right)$ that are then used to generate *n* × *m* phase modulation patterns through equation (1). These are then summed together to generate the (partial) phase pattern to be sent to the wavefront-shaping device 21: $Φ \left({u}_{in}, {v}_{in}\right) = arg \left({\sum }_{{j}_{x} = 1}^{n} {\sum }_{{j}_{y} = 1}^{m} exp \left({iϕ}_{scan}^{{j}_{x} , {j}_{y} , {p}_{opt}^{{j}_{x} , {j}_{y}}}\left({u}_{in}, {v}_{in}\right)\right)\right)$

### (C) The modulation step

Φ(*uᵢₙ*, *vᵢₙ*) is then applied to the phase-modulation device 21 in the excitation block 20, modulating the phase of the laser beam entering the input facet. This generates the desired patterns in the (*xₒᵤₜ,yₒᵤₜ*) or (*uₒᵤₜ,vₒᵤₜ*) and therefore sets the plasmonic fiber 10 to operate in a specific condition. The wavelength of the laser beam is chosen on the basis of the resonant wavelengths of the plasmonic structure to be targeted, in agreement with the wavelengths employed in step (A). Some possible applications are for example shown in Figure 5 and briefly discussed below:
- Targeting a light intensity pattern on the plasmonic facet (*xₒᵤₜ,yₒᵤₜ*) allows control and dynamic modulation of the local field enhancement, with applications in near-field imaging endoscopy with molecular sensitivity, spatially-resolved extraordinary optical transmission (EOT), and reconfigurable sub-diffraction structured beaming.
- Targeting a pattern in the far field plane (*uₒᵤₜ,vₒᵤₜ*) instead allows to set the workpoint of the system in the dispersion diagram, to provide for specific output directions or beam forming, to obtain wave-vector encoding of the coupling between guided light and free-space photons.
- Controlling the coupling between the guided modes of the fiber, the plasmonic modes of the structures and the optical radiation propagating outside the waveguide (both away from the tip, e.g. emission, and towards the tip, e.g. collection) to select restricted spectral and angular ranges using a wave-vector encoding strategy that is based on the complex energy-wavevector characteristic response of the plasmonic structures.

In a further embodiment (not shown), the output facet 12 of the plasmonic multimode optical fiber 10 further comprises nanometric optical sources deposited on the plasmonic structure 15. These nanometric optical sources may be, e.g., quantum dots or single layers of molecules. These nanometric optical sources are supplementary structures added to the plasmonic structure and have the function of producing a signal that directly measures the response in terms of non-radiative electromagnetic field.

In this embodiment, in the measurement step (A) a further set of phase modulation components can be determined in connection with the non-radiative electromagnetic field on the output facet 12 of the plasmonic multimode optical fiber 10 within a distance smaller than the excitation wavelength of the laser beam. A third detector in addition to the detectors 31 and 32 is provided to measure the light intensity patterns associated with the plasmonic modes excited by the further set of phase modulation components.

In this way, the coupling of the guided modes in the plasmonic multimode fiber with the spatial and temporal intensity distribution of the non-radiative electromagnetic field on the plasmonic output facet is measured and modulated within a distance smaller than the excitation wavelength by imaging the intensity of emission of the optical sources with nanometric dimensions.

## Claims

1. A method for dynamically controlling the coupling state between guided modes and plasmonic resonances in a plasmonic multimode optical fiber (10), said plasmonic multimode optical fiber comprising an input facet (11), an output facet (12) and a plasmonic structure (15) formed on the output facet (12), wherein the method comprises the steps of:
a) providing a set of phase modulation components ${ϕ}_{interfere}^{{j}_{x} , {j}_{y} , p} \left({u}_{in}, {v}_{in}\right)$ to be applied to an input light field entering the input facet (11) of the plasmonic multimode optical fiber (10), each phase modulation component ${ϕ}_{interfere}^{{j}_{x} , {j}_{y} , p} \left({u}_{in}, {v}_{in}\right)$ causing an associated near field intensity distribution of the electromagnetic field on the plasmonic structure *NF^{jₓ,j_{y},p}*(*xₒᵤₜ, yₒᵤₜ*) and an associated angular radiative pattern after the output facet (12) of the plasmonic multimode optical fiber (10) measured by the far field image *FF^{jₓ,j_{y},p}*(*uₒᵤₜ, vₒᵤₜ*);
b) determining a computed phase modulation Φ(*uᵢₙ*, *vᵢₙ*) to be applied to the input light field to produce coupling between guided modes and plasmonic resonances, defined by a target intensity distribution of the electromagnetic field on the plasmonic structure (15) and/or a target angular radiative pattern after the output facet (12) of the plasmonic multimode optical fiber (10), said computed phase modulation being defined as a combination of the phase modulation components ${ϕ}_{interfere}^{{j}_{x} , {j}_{y} , p} \left({u}_{in}, {v}_{in}\right)$, wherein said combination of the phase modulation components is computed based on the near field intensity distributions *NF^{jₓ,j_{y},p}*(*xₒᵤₜ, yₒᵤₜ*) or far field images *FF^{jₓ,j_{y},p}*(*uₒᵤₜ*, *vₒᵤₜ*) associated to the phase modulation components ${ϕ}_{interfere}^{{j}_{x} , {j}_{y} , p} \left({u}_{in}, {v}_{in}\right)$ and the target intensity distribution and/or target angular radiative pattern, said near field intensity distributions *NF^{jₓ,j_{y},p}*(*xₒᵤₜ, yₒᵤₜ*) or far field images *FF^{jₓ,jy,p}*(*uₒᵤₜ, vₒᵤₜ*) being analysed to calculate, for each point (*jₓ, j_{y}*) of an array of points on said input facet (11), phase shifts $p = {p}_{opt}^{{j}_{x} , {j}_{y}}$ that generate said target intensity distribution or said target angular radiative pattern, over an ensemble of targeted pixels in an image plane of the output facet (12) or in a Fourier plane of the output facet (12), respectively; and
c) applying the computed phase modulation Φ(*uᵢₙ*, *vᵢₙ*) to a laser beam entering the input facet (11) of the plasmonic multimode optical fiber (10), said laser beam having a wavelength chosen to match specific resonant wavelengths of the plasmonic structure (15);
wherein the near field intensity distributions *NF^{jₓ,j_{y},p}*(*xₒᵤₜ, yₒᵤₜ*) or far field images *FF^{jₓ,j_{y},p}*(*uₒᵤₜ*, *vₒᵤₜ*) associated to the phase modulation components ${ϕ}_{interfere}^{{j}_{x} , {j}_{y} , p} \left({u}_{in}, {v}_{in}\right)$ are determined in a plasmonic mode phase measurement step, said plasmonic mode phase measurement step comprising:
- causing a reference beam (*B_{ref}*) and a scanning beam (*B_{scan}*) to enter the input facet (11) of the multimode optical fiber (10), wherein the reference beam (*B_{ref}*) has a phase modulation pattern *ϕ_{ref}*(*uᵢₙ, vᵢₙ*),
where (*uᵢₙ*, *vᵢₙ*) are coordinates in the Fourier plane of the input facet (11), and the scanning beam (*B_{scan}*) sequentially impinges on the array of points on the input facet (11) and has a phase modulation pattern ${ϕ}_{scan}^{{j}_{x} , {j}_{y} , p} \left({u}_{in}, {v}_{in}\right)$, where (*jₓ, j_{y}*) are array indexes and *p* is a discretized phase shift ranging from 0 to 2*π*, wherein the reference beam (*B_{ref}*) and scanning beam (*B_{scan}*) propagate through the multimode optical fiber (10), interfere with each other and excite plasmonic modes on the output facet (12), thereby generating the near field intensity distributions *NF^{jₓ,j_{y},p}*(*xₒᵤₜ, yₒᵤₜ*) and far field images *FF^{jₓ,j_{y},p}*(*uₒᵤₜ, vₒᵤₜ*) associated to the phase modulation components, respectively in the image plane of the output facet (12) and in the Fourier plane of the output facet (12).

2. The method of claim 1, wherein in said plasmonic mode phase measurement step *n* × *m* × *P* phase modulation components ${ϕ}_{interfere}^{{j}_{x} , {j}_{y} , p} \left({u}_{in}, {v}_{in}\right)$ and *n* × *m* × *P* associated near field intensity distributions *NF^{jₓ,j_{y},p}*(*xₒᵤₜ, yₒᵤₜ*) or far field images *FF^{jₓ,j_{y},p}*(*uₒᵤₜ*, *vₒᵤₜ*) are generated, wherein *n* × *m* is the size of the array of points and *P* is the total number of steps in which *p* is incremented from 0 to 2*π*.

3. The method of any of the preceding claims, wherein the output facet (12) of the plasmonic multimode optical fiber (10) further comprises nanometric optical sources deposited on the plasmonic structure (15), wherein step a) further comprises
providing a further set of phase modulation components to be applied to the input light field entering the input facet (11) of the plasmonic multimode optical fiber (10), each phase modulation component of the further set of phase modulation components causing an associated intensity distribution of the non-radiative electromagnetic field at a distance from the output facet (12) smaller than the excitation wavelength;
wherein step b) further comprises
determining a further computed phase modulation to be applied to the input light field to produce a target intensity distribution of the non-radiative electromagnetic field, said further computed phase modulation being defined as a combination of the further phase modulation components;
wherein step c) further comprises
applying the further computed phase modulation to a laser beam entering the input facet (11) of the plasmonic multimode optical fiber (10).

4. Apparatus for dynamically controlling the coupling state between guided modes and plasmonic resonances in a plasmonic multimode optical fiber (10), said plasmonic multimode optical fiber (10) comprising an input facet (11), an output facet (12) and a plasmonic structure (15) formed on the output facet (12), wherein the apparatus comprises:
a wavefront shaping device (21) configured to phase-modulate the wavefront of a wavelength tunable laser beam,
a microscope objective (22) optically conjugated with the wavefront shaping device (21) and configured to focus the modulated wavefront on the input facet (11) of the plasmonic multimode optical fiber (10),
a spatially resolved detectors arrangement (31, 32) optically conjugated with the output facet (12) of the multimode optical fiber (10), said detecting arrangement comprising a first detector (31) configured to image the intensity distribution of the electromagnetic field on the output facet (12) and a second detector (32) configured to image the far field response of the output facet (12), and
a control unit (50) configured to
a) store a set of phase modulation components ${ϕ}_{interfere}^{{j}_{x} , {j}_{y} , p} \left({u}_{in}, {v}_{in}\right)$ to be applied to an input light field entering the input facet (11) of the plasmonic multimode optical fiber (10), each phase modulation component ${ϕ}_{scan}^{{j}_{x} , {j}_{y} , p} \left({u}_{in}, {v}_{in}\right)$ causing the light field to generate an associated near field intensity distribution *NF^{jₓ,j_{y},p}*(*xₒᵤₜ, yₒᵤₜ*) of the electromagnetic field on the plasmonic structure (15) and an associated angular radiative pattern *FF^{jₓ,j_{y},p}*(*uₒᵤₜ*, *vₒᵤₜ*) after the output facet of the plasmonic multimode optical fiber on the spatially resolved detectors arrangement (31, 32);
b) determine a computed phase modulation Φ(*uᵢₙ*, *vᵢₙ*) to be applied to the input light field to produce coupling between guided modes and plasmonic resonances, defined by a target intensity distribution of the electromagnetic field on the plasmonic structure and/or a target radiative pattern after the output facet of the plasmonic multimode optical fiber on the spatially resolved detectors arrangement (31, 32), said computed phase modulation being defined as a combination of the phase modulation components ${ϕ}_{interfere}^{{j}_{x} , {j}_{y} , p} \left({u}_{in}, {v}_{in}\right)$, wherein said combination of the phase modulation components is computed based on the intensity near field distributions *NF^{jₓ,j_{y},p}*(*xₒᵤₜ, yₒᵤₜ*) or far field images *FF^{jₓ,j_{y},p}*(*uₒᵤₜ, vₒᵤₜ*) associated to the phase modulation components ${ϕ}_{interfere}^{{j}_{x} , {j}_{y} , p} \left({u}_{in}, {v}_{in}\right)$ and the target intensity distribution and/or target angular radiative pattern, said near field intensity distributions *NF^{jₓ,j_{y},p}*(*xₒᵤₜ, yₒᵤₜ*) or far field images *FF^{jₓ,j_{y},p}*(*uₒᵤₜ*, *vₒᵤₜ*) being analysed to calculate, for each point (*jₓ, j_{y}*) of an array of points of said input facet (11), phase shifts $p = {p}_{opt}^{{j}_{x} , {j}_{y}}$ that generate said target intensity distribution or said target angular radiative pattern, over an ensemble of targeted pixels in an image plane of the output facet (12) or in a Fourier plane of the output facet (12), respectively; and
c) control the wavefront shaping device (21) to apply the computed phase modulation Φ(*uᵢₙ*, *vᵢₙ*) to the laser beam, said laser beam having a wavelength chosen to match specific resonant wavelengths of the plasmonic structure (15);
wherein the near field intensity distributions *NF^{jₓ,j_{y},p}*(*xₒᵤₜ, yₒᵤₜ*) or far field images *FF^{jₓ,j_{y},p}*(*uₒᵤₜ*, *vₒᵤₜ*) associated to the phase modulation components ${ϕ}_{interfere}^{{j}_{x} , {j}_{y} , p} \left({u}_{in}, {v}_{in}\right)$ are determined in a plasmonic mode phase measurement step, said plasmonic mode phase measurement step comprising:
- causing a reference beam (*B_{ref}*) and a scanning beam (*B_{scan}*) to enter the input facet (11) of the multimode optical fiber (10), wherein the reference beam (*B_{ref}*) has a phase modulation pattern *ϕ_{ref}*(*uᵢₙ, vᵢₙ*),
where (*uᵢₙ*, *vᵢₙ*) are coordinates in the Fourier plane of the input facet (11), and the scanning beam (*B_{scan}*) sequentially impinges on the array of points on the input facet (11) and has a phase modulation pattern ${ϕ}_{scan}^{{j}_{x} , {j}_{y} , p} \left({u}_{in}, {v}_{in}\right)$, where (*jₓ, j_{y}*) are array indexes and p is a discretized phase shift ranging from 0 to 2*π*, wherein the reference beam (*B_{ref}*) and scanning beam (*B_{scan}*) propagate through the multimode optical fiber (10), interfere with each other and excite plasmonic modes on the output facet (12), thereby generating the near field intensity distributions or *NF^{jₓ,j_{y},p}*(*xₒᵤₜ, yₒᵤₜ*) and far field images *FF^{jₓ,j_{y},p}*(*uₒᵤₜ*, *vₒᵤₜ*) associated to the phase modulation components, respectively in the image plane of the output facet (12) and in the Fourier plane of the output facet (12).

5. The apparatus of claim 4, wherein the output facet (12) of the plasmonic multimode optical fiber (10) further comprises nanometric optical sources deposited on the plasmonic structure (15), wherein the control unit (50) is further configured to
- store a further set of phase modulation components to be applied to the input light field entering the input facet (11) of the plasmonic multimode optical fiber (10), each phase modulation component of the further set of phase modulation components causing an associated intensity distribution of the non-radiative electromagnetic field at a distance from the output facet (12) smaller than the excitation wavelength;
- determine a further computed phase modulation to be applied to the input light field to produce a target intensity distribution of the non-radiative electromagnetic field, said further computed phase modulation being defined as a combination of the further phase modulation components; and
- control the wavefront-shaping (21) to apply the further computed phase modulation to a laser beam entering the input facet (11) of the plasmonic multimode optical fiber (10).

## Patentansprüche

1. Verfahren zur dynamischen Steuerung des Kopplungszustands zwischen geführten Moden und plasmonischen Resonanzen in einer plasmonischen multimodalen optischen Faser (10), wobei die plasmonische multimodale optische Faser eine Eingangsstirnfläche (11), eine Ausgangsstirnfläche (12) und eine auf der Ausgangsstirnfläche (12) ausgebildete plasmonische Struktur (15) umfasst, wobei das Verfahren die folgenden Schritte umfasst:
a) Bereitstellen eines Satzes von Phasenmodulationskomponenten ${ϕ}_{interfere}^{{j}_{x} , {j}_{y} , p} \left({u}_{in}, {v}_{in}\right)$, die auf ein Eingangslichtfeld angewendet werden, das in die Eingangsstirnfläche (11) der plasmonischen multimodalen optischen Faser (10) eintritt, wobei jede Phasenmodulationskomponente ${ϕ}_{interfere}^{{j}_{x} , {j}_{y} , p} \left({u}_{in}, {v}_{in}\right)$ eine zugeordnete Nahfeldintensitätsverteilung des elektromagnetischen Feldes auf der plasmonischen Struktur *NF^{jₓ,j_{y},p}*(*xₒᵤₜ, yₒᵤₜ*) und ein zugeordnetes Winkelstrahlungsmuster nach der Ausgangsstirnfläche (12) der plasmonischen multimodalen optischen Faser (10) verursacht, gemessen durch das Fernfeldbild *FF^{jₓ,j_{y},p}*(*uₒᵤₜ*, *vₒᵤₜ*);
b) Bestimmen einer berechneten Phasenmodulation Φ(*uᵢₙ, vᵢₙ*), die auf das Eingangslichtfeld angewendet werden soll, um eine Kopplung zwischen geführten Moden und plasmonischen Resonanzen zu erzeugen, definiert durch eine Zielintensitätsverteilung des elektromagnetischen Feldes auf der plasmonischen Struktur (15) und/oder ein Ziel-Winkelstrahlungsmuster nach der Ausgangsstirnfläche (12) der plasmonischen multimodalen optischen Faser (10), wobei die berechnete Phasenmodulation als eine Kombination der Phasenmodulationskomponenten ${ϕ}_{interfere}^{{j}_{x} , {j}_{y} , p} \left({u}_{in}, {v}_{in}\right)$ definiert ist, wobei die genannte Kombination der Phasenmodulationskomponenten auf der Grundlage der Nahfeldintensitätsverteilungen *NF^{jₓ,j_{y},p}*(*xₒᵤₜ, yₒᵤₜ*) oder Fernfeldbilder *FF^{jₓ,j_{y},p}*(*uₒᵤₜ, vₒᵤₜ*), die den Phasenmodulationskomponenten ${ϕ}_{interfere}^{{j}_{x} , {j}_{y} , p} \left({u}_{in}, {v}_{in}\right)$ und der Zielintensitätsverteilung und/oder dem Ziel-Winkelstrahlungsmuster zugeordnet sind, berechnet wird, wobei die genannten Nahfeldintensitätsverteilungen *NF^{jₓ,j_{y},p}*(*xₒᵤₜ, yₒᵤₜ*) oder Fernfeldbilder *FF^{jₓ,j_{y},p}*(*uₒᵤₜ, vₒᵤₜ*) analysiert werden, um für jeden Punkt (*jₓ, j_{y}*) eines Punktarrays auf der genannten Eingangsstirnfläche (11) Phasenverschiebungen p = ${p}_{opt}^{{j}_{x} , {j}_{y}}$ zu berechnen, die die genannte Zielintensitätsverteilung oder das genannte Ziel-Winkelstrahlungsmuster über eine Menge von Zielpixeln in einer Bildebene der Ausgangsstirnfläche (12) bzw. in einer Fourier-Ebene der Ausgangsstirnfläche (12) erzeugen; und
c) Anwenden der berechneten Phasenmodulation Φ(*uᵢₙ*, *vᵢₙ*) auf einen Laserstrahl, der in die Eingangsstirnfläche (11) der plasmonischen multimodalen optischen Faser (10) eintritt, wobei der genannte Laserstrahl eine Wellenlänge aufweist, die so gewählt ist, dass sie spezifischen Resonanzwellenlängen der plasmonischen Struktur (15) entspricht;
wobei die Nahfeldintensitätsverteilungen *NF^{jₓ,j_{y},p}*(*xₒᵤₜ, yₒᵤₜ*) oder Fernfeldbilder *FF^{jₓ,j_{y},p}*(*uₒᵤₜ, vₒᵤₜ*), die den Phasenmodulationskomponenten ${ϕ}_{interfere}^{{j}_{x} , {j}_{y} , p} \left({u}_{in}, {v}_{in}\right)$ zugeordnet sind, in einem plasmonischen Moden-Phasenmessschritt bestimmt werden, wobei der genannte plasmonische Moden-Phasenmessschritt Folgendes umfasst:
- Bewirken, dass ein Referenzstrahl (*B_{ref}*) und ein Abtaststrahl (*B_{scan}*) in die Eingangsstirnfläche (11) der multimodalen optischen Faser (10) eintreten, wobei der Referenzstrahl (*B_{ref}*) ein Phasenmodulationsmuster *ϕ_{ref}*(*uᵢₙ*, *vᵢₙ*) aufweist,
wobei (*uᵢₙ^{,} vᵢₙ*) Koordinaten in der Fourier-Ebene der Eingangsstirnfläche (11) sind und der Abtaststrahl (*B_{scan}*) nacheinander auf das Punktarray auf der Eingangsstirnfläche (11) auftrifft und ein Phasenmodulationsmuster ${ϕ}_{scan}^{{j}_{x} , {j}_{y} , p} \left({u}_{in}, {v}_{in}\right)$ aufweist, wobei (*jₓ^{,} j_{y}*) Arrayindizes und p eine diskretisierte Phasenverschiebung im Bereich von 0 bis 2*π* sind, wobei der Referenzstrahl (*B_{ref}*) und der Abtaststrahl (*B_{scan}*), die sich durch die multimodale optische Faser (10) ausbreiten, miteinander interferieren und plasmonische Moden auf der Ausgangsstirnfläche (12) anregen, wodurch die Nahfeldintensitätsverteilungen *NF^{jₓ,j_{y},p}*(*xₒᵤₜ, yₒᵤₜ*) und die Fernfeldbilder *FF^{jₓ,j_{y},p}*(*uₒᵤₜ*, *vₒᵤₜ*) erzeugt werden, die den Phasenmodulationskomponenten zugeordnet sind, jeweils in der Bildebene der Ausgangsstirnfläche (12) und in der Fourier-Ebene der Ausgangsstirnfläche (12).

2. Verfahren nach Anspruch 1, wobei in dem genannten plasmonischen Moden-Phasenmessschritt *n* × *m* × *P* Phasenmodulationskomponenten ${ϕ}_{interfere}^{{j}_{x} , {j}_{y} , p} \left({u}_{in}, {v}_{in}\right)$ und *n* × *m* × *P* zugeordnete Nahfeldintensitätsverteilungen *NF^{jₓ,j_{y},p}*(*xₒᵤₜ, yₒᵤₜ*) oder Fernfeldbilder *FF^{jₓ,j_{y},p}*(*uₒᵤₜ*, *vₒᵤₜ*) erzeugt werden, wobei *n* × *m* die Größe des Punktarrays ist und *P* die Gesamtanzahl der Schritte ist, in denen *p* von 0 bis 2*π* inkrementiert wird.

3. Verfahren nach einem der vorhergehenden Ansprüche, wobei die Ausgangsstirnfläche (12) der plasmonischen multimodalen optischen Faser (10) ferner nanometrische optische Quellen umfasst, die auf der plasmonischen Struktur (15) abgeschieden sind, wobei Schritt a) ferner umfasst
Bereitstellen eines weiteren Satzes von Phasenmodulationskomponenten, die auf das Eingangslichtfeld angewendet werden, das in die Eingangsstirnfläche (11) der plasmonischen multimodalen optischen Faser (10) eintritt, wobei jede Phasenmodulationskomponente des weiteren Satzes von Phasenmodulationskomponenten eine zugeordnete Intensitätsverteilung des nichtstrahlenden elektromagnetischen Feldes in einem Abstand von der Ausgangsstirnfläche (12), der kleiner als die Anregungswellenlänge ist, verursacht;
wobei Schritt b) ferner umfasst
Bestimmen einer weiteren berechneten Phasenmodulation, die auf das Eingangslichtfeld angewendet werden soll, um eine Zielintensitätsverteilung des nichtstrahlenden elektromagnetischen Feldes zu erzeugen, wobei die genannte weitere berechnete Phasenmodulation als eine Kombination der weiteren Phasenmodulationskomponenten definiert ist;
wobei Schritt c) ferner umfasst
Anwenden der weiteren berechneten Phasenmodulation auf einen Laserstrahl, der in die Eingangsstirnfläche (11) der plasmonischen multimodalen optischen Faser (10) eintritt.

4. Vorrichtung zur dynamischen Steuerung des Kopplungszustands zwischen geführten Moden und plasmonischen Resonanzen in einer plasmonischen multimodalen optischen Faser (10), wobei die plasmonische multimodale optische Faser (10) eine Eingangsstirnfläche (11), eine Ausgangsstirnfläche (12) und eine auf der Ausgangsstirnfläche (12) ausgebildete plasmonische Struktur (15) umfasst, wobei die Vorrichtung umfasst:
eine Wellenfrontformungsvorrichtung (21), die dazu ausgelegt ist, die Wellenfront eines wellenlängenabstimmbaren Laserstrahls in der Phase zu modulieren,
ein Mikroskopobjektiv (22), das optisch mit der Wellenfrontformungsvorrichtung (21) konjugiert ist und dazu ausgelegt ist, die modulierte Wellenfront auf die Eingangsstirnfläche (11) der plasmonischen multimodalen optischen Faser (10) zu fokussieren,
eine ortsaufgelöste Detektoranordnung (31, 32), die optisch mit der Ausgangsstirnfläche (12) der multimodalen optischen Faser (10) konjugiert ist, wobei die genannte Detektoranordnung einen ersten Detektor (31) umfasst, der dazu ausgelegt ist, die Intensitätsverteilung des elektromagnetischen Feldes auf der Ausgangsstirnfläche (12) abzubilden, und einen zweiten Detektor (32), der dazu ausgelegt ist, die Fernfeldantwort der Ausgangsstirnfläche (12) abzubilden, und
eine Steuereinheit (50), die dazu ausgelegt ist,
a) einen Satz von Phasenmodulationskomponenten ${ϕ}_{interfere}^{{j}_{x} , {j}_{y} , p} \left({u}_{in}, {v}_{in}\right)$ zu speichern, die auf ein Eingangslichtfeld angewendet werden, das in die Eingangsstirnfläche (11) der plasmonischen multimodalen optischen Faser (10) eintritt, wobei jede Phasenmodulationskomponente ${ϕ}_{scan}^{{j}_{x} , {j}_{y} , p} \left({u}_{in}, {v}_{in}\right)$ bewirkt, dass das Lichtfeld eine zugeordnete Nahfeldintensitätsverteilung *NF^{jₓ,j_{y},p}*(*xₒᵤₜ, yₒᵤₜ*) des elektromagnetischen Feldes auf der plasmonischen Struktur (15) und ein zugeordnetes Winkelstrahlungsmuster *FF^{jₓ,j_{y},p}*(*uₒᵤₜ*, *vₒᵤₜ*) nach der Ausgangsstirnfläche der plasmonischen multimodalen optischen Faser auf der ortsaufgelösten Detektoranordnung (31, 32) erzeugt;
b) eine berechnete Phasenmodulation Φ(*uᵢₙ*, *vᵢₙ*) zu bestimmen, die auf das Eingangslichtfeld angewendet werden soll, um eine Kopplung zwischen geführten Moden und plasmonischen Resonanzen zu erzeugen, definiert durch eine Zielintensitätsverteilung des elektromagnetischen Feldes auf der plasmonischen Struktur und/oder ein Zielstrahlungsmuster nach der Ausgangsstirnfläche der plasmonischen multimodalen optischen Faser auf der ortsaufgelösten Detektoranordnung (31, 32), wobei die berechnete Phasenmodulation als eine Kombination der Phasenmodulationskomponenten ${ϕ}_{interfere}^{{j}_{x} , {j}_{y} , p} \left({u}_{in}, {v}_{in}\right)$ definiert ist, wobei die genannte Kombination der Phasenmodulationskomponenten auf der Grundlage der Nahfeldintensitätsverteilungen *NF^{jₓ,j_{y},p}*(*xₒᵤₜ, yₒᵤₜ*) oder Fernfeldbilder *FF^{jₓ,j_{y},p}*(*uₒᵤₜ, vₒᵤₜ*), die den Phasenmodulationskomponenten ${ϕ}_{interfere}^{{j}_{x} , {j}_{y} , p} \left({u}_{in}, {v}_{in}\right)$ und der Zielintensitätsverteilung und/oder dem Ziel-Winkelstrahlungsmuster zugeordnet sind, berechnet wird, wobei die genannten Nahfeldintensitätsverteilungen *NF^{jₓ,j_{y},p}*(*xₒᵤₜ, yₒᵤₜ*) oder Fernfeldbilder *FF^{jₓ,j_{y},p}*(*uₒᵤₜ, vₒᵤₜ*) analysiert werden, um für jeden Punkt (*jₓ^{,} j_{y}*) eines Punktarrays der genannten Eingangsstirnfläche (11) Phasenverschiebungen $p = {p}_{opt}^{{j}_{x} , {j}_{y}}$ zu berechnen, die die genannte Zielintensitätsverteilung oder das genannte Ziel-Winkelstrahlungsmuster über eine Menge von Zielpixeln in einer Bildebene der Ausgangsstirnfläche (12) bzw. in einer Fourier-Ebene der Ausgangsstirnfläche (12) erzeugen; und
c) die Wellenfrontformungsvorrichtung (21) zu steuern, um die berechnete Phasenmodulation Φ(*uᵢₙ*, *vᵢₙ*) auf den Laserstrahl anzuwenden, wobei der genannte Laserstrahl eine Wellenlänge aufweist, die so gewählt ist, dass sie spezifischen Resonanzwellenlängen der plasmonischen Struktur (15) entspricht;
wobei die Nahfeldintensitätsverteilungen *NF^{jₓ,j_{y},p}*(*xₒᵤₜ, yₒᵤₜ*) oder Fernfeldbilder *FF^{jₓ,j_{y},p}*(*uₒᵤₜ*, *vₒᵤₜ*), die den Phasenmodulationskomponenten ${ϕ}_{interfere}^{{j}_{x} , {j}_{y} , p} \left({u}_{in}, {v}_{in}\right)$ zugeordnet sind, in einem plasmonischen Moden-Phasenmessschritt bestimmt werden, wobei der genannte plasmonische Moden-Phasenmessschritt Folgendes umfasst:
- Bewirken, dass ein Referenzstrahl (*B_{ref}*) und ein Abtaststrahl (*B_{scan}*) in die Eingangsstirnfläche (11) der multimodalen optischen Faser (10) eintreten, wobei der Referenzstrahl (*B_{ref}*) ein Phasenmodulationsmuster *ϕ_{ref}*(*uᵢₙ*, *vᵢₙ*) aufweist,
wobei (*uᵢₙ^{,} vᵢₙ*) Koordinaten in der Fourier-Ebene der Eingangsstirnfläche (11) sind und der Abtaststrahl (*B_{scan}*) nacheinander auf das Punktarray auf der Eingangsstirnfläche (11) auftrifft und ein Phasenmodulationsmuster ${ϕ}_{scan}^{{j}_{x} , {j}_{y} , p} \left({u}_{in}, {v}_{in}\right)$ aufweist, wobei (*jₓ^{,} j_{y}*) Arrayindizes und p eine diskretisierte Phasenverschiebung im Bereich von 0 bis 2*π* sind, wobei der Referenzstrahl (*B_{ref}*) und der Abtaststrahl (*B_{scan}*), die sich durch die multimodale optische Faser (10) ausbreiten, miteinander interferieren und plasmonische Moden auf der Ausgangsstirnfläche (12) anregen, wodurch die Nahfeldintensitätsverteilungen *NF^{jₓ,j_{y},p}*(*xₒᵤₜ, yₒᵤₜ*) und Fernfeldbilder *FF^{jₓ,j_{y},p}*(*uₒᵤₜ*, *vₒᵤₜ*) erzeugt werden, die den Phasenmodulationskomponenten zugeordnet sind, jeweils in der Bildebene der Ausgangsstirnfläche (12) und in der Fourier-Ebene der Ausgangsstirnfläche (12).

5. Vorrichtung nach Anspruch 4, wobei die Ausgangsstirnfläche (12) der plasmonischen multimodalen optischen Faser (10) ferner nanometrische optische Quellen umfasst, die auf der plasmonischen Struktur (15) abgeschieden sind, wobei die Steuereinheit (50) ferner dazu ausgelegt ist,
- einen weiteren Satz von Phasenmodulationskomponenten zu speichern, die auf das Eingangslichtfeld angewendet werden, das in die Eingangsstirnfläche (11) der plasmonischen multimodalen optischen Faser (10) eintritt, wobei jede Phasenmodulationskomponente des weiteren Satzes von Phasenmodulationskomponenten eine zugeordnete Intensitätsverteilung des nichtstrahlenden elektromagnetischen Feldes in einem Abstand von der Ausgangsstirnfläche (12), der kleiner als die Anregungswellenlänge ist, verursacht;
- eine weitere berechnete Phasenmodulation zu bestimmen, die auf das Eingangslichtfeld angewendet werden soll, um eine Zielintensitätsverteilung des nichtstrahlenden elektromagnetischen Feldes zu erzeugen, wobei die genannte weitere berechnete Phasenmodulation als eine Kombination der weiteren Phasenmodulationskomponenten definiert ist; und
- die Wellenfrontformungsvorrichtung (21) zu steuern, um die weitere berechnete Phasenmodulation auf einen Laserstrahl anzuwenden, der in die Eingangsstirnfläche (11) der plasmonischen multimodalen optischen Faser (10) eintritt.

## Revendications

1. Procédé de commande dynamique de l'état de couplage entre des modes guidés et des résonances plasmoniques dans une fibre optique multimode plasmonique (10), ladite fibre optique multimode plasmonique comprenant une face d'entrée (11), une face de sortie (12) et une structure plasmonique (15) formée sur la face de sortie (12), le procédé comprenant les étapes consistant à :
a) fournir un ensemble de composantes de modulation de phase ${ϕ}_{interfere}^{{j}_{x} , , p} \left({u}_{in}, {v}_{in}\right)$ à appliquer à un champ lumineux d'entrée pénétrant dans la face d'entrée (11) de la fibre optique multimode plasmonique (10), chaque composante de modulation de phase ${ϕ}_{interfere}^{{j}_{x} , {j}_{y} , p} \left({u}_{in}, {v}_{in}\right)$ provoquant une distribution d'intensité de champ proche associée du champ électromagnétique sur la structure plasmonique *NF^{jₓ,j_{y},p}*(*xₒᵤₜ, yₒᵤₜ*) et un motif radiatif angulaire associé après la face de sortie (12) de la fibre optique multimode plasmonique (10) mesuré par l'image de champ lointain *FF^{jₓ,j_{y},p}*(*uₒᵤₜ, vₒᵤₜ*);
b) déterminer une modulation de phase calculée Φ(*uᵢₙ*, *vᵢₙ*) à appliquer au champ lumineux d'entrée afin de produire un couplage entre des modes guidés et des résonances plasmoniques, défini par une distribution d'intensité cible du champ électromagnétique sur la structure plasmonique (15) et/ou un motif radiatif angulaire cible après la face de sortie (12) de la fibre optique multimode plasmonique (10), ladite modulation de phase calculée étant définie comme une combinaison des composantes de modulation de phase ${ϕ}_{interfere}^{{j}_{x} , {j}_{y} , p} \left({u}_{in}, {v}_{in}\right)$, ladite combinaison des composantes de modulation de phase étant calculée sur la base des distributions d'intensité de champ proche *NF^{jₓ,j_{y},p}*(*xₒᵤₜ, yₒᵤₜ*) ou des images de champ lointain *FF^{jₓ,j_{y},p}*(*uₒᵤₜ, vₒᵤₜ*) associées aux composantes de modulation de phase ${ϕ}_{interfere}^{{j}_{x} , {j}_{y} , p} \left({u}_{in}, {v}_{in}\right)$ et à la distribution d'intensité cible et/ou au motif radiatif angulaire cible, lesdites distributions d'intensité de champ proche *NF^{jₓ,j_{y},p}*(*xₒᵤₜ, yₒᵤₜ*) ou images de champ lointain *FF^{jₓ,j_{y},p}*(*uₒᵤₜ*, *vₒᵤₜ*) étant analysées afin de calculer, pour chaque point (*jₓ, j_{y}*) d'un réseau de points sur ladite face d'entrée (11), des déphasages $p = {p}_{opt}^{{j}_{x} , {j}_{y}}$ qui génèrent ladite distribution d'intensité cible ou ledit motif radiatif angulaire cible, sur un ensemble de pixels ciblés dans un plan image de la face de sortie (12) ou dans un plan de Fourier de la face de sortie (12), respectivement ; et
c) appliquer la modulation de phase calculée Φ(*uᵢₙ*, *vᵢₙ*) à un faisceau laser pénétrant dans la face d'entrée (11) de la fibre optique multimode plasmonique (10), ledit faisceau laser ayant une longueur d'onde choisie pour correspondre à des longueurs d'onde résonantes spécifiques de la structure plasmonique (15);
dans lequel les distributions d'intensité de champ proche *NF^{jₓ,j_{y},p}*(*xₒᵤₜ, yₒᵤₜ*) ou les images de champ lointain *FF^{jₓ,j_{y},p}*(*uₒᵤₜ*, *vₒᵤₜ*) associées aux composantes de modulation de phase ${ϕ}_{interfere}^{{j}_{x} , {j}_{y} , p} \left({u}_{in}, {v}_{in}\right)$ sont déterminées dans une étape de mesure de phase du mode plasmonique, ladite étape de mesure de phase du mode plasmonique comprenant :
- faire pénétrer un faisceau de référence (*B_{ref}*) et un faisceau de balayage (*B_{scan}*) dans la face d'entrée (11) de la fibre optique multimode (10), dans lequel le faisceau de référence (*B_{ref}*) présente une partition de modulation de phase *ϕ_{ref}*(*uᵢₙ, vᵢₙ*),
où (*uᵢₙ*, *vᵢₙ*) sont des coordonnées dans le plan de Fourier de la face d'entrée (11), et le faisceau de balayage (*B_{scan}*) impacte séquentiellement le réseau de points sur la face d'entrée (11) et présente une partition de modulation de phase ${ϕ}_{scan}^{{j}_{x} , {j}_{y} , p} \left({u}_{in}, {v}_{in}\right)$, où (*jₓ, j_{y}*) sont des indices de réseau et p est un déphasage discrétisé variant de 0 à 2*π,* dans lequel le faisceau de référence (*B_{ref}*) et le faisceau de balayage (*B_{scan}*) se propagent à travers la fibre optique multimode (10), interfèrent l'un avec l'autre et excitent des modes plasmoniques sur la face de sortie (12), générant ainsi les distributions d'intensité de champ proche *NF^{jₓ,jy,p}*(*xₒᵤₜ, yₒᵤₜ*) et les images de champ lointain *FF^{jₓ,j_{y},p}*(*uₒᵤₜ*, *vₒᵤₜ*) associées aux composantes de modulation de phase, respectivement dans le plan image de la face de sortie (12) et dans le plan de Fourier de la face de sortie (12).

2. Procédé selon la revendication 1, dans lequel, dans ladite étape de mesure de phase du mode plasmonique, *n* × *m* × *P* composantes de modulation de phase ${ϕ}_{interfere}^{{j}_{x} , {j}_{y} , p} \left({u}_{in}, {v}_{in}\right)$ et *n* × *m* × *P* distributions d'intensité de champ proche associées *NF^{jₓ,j_{y},p}*(*xₒᵤₜ, yₒᵤₜ*) ou images de champ lointain *FF^{jₓ,j_{y},p}*(*uₒᵤₜ*, *vₒᵤₜ*) sont générées, où *n* × *m* est la taille du réseau de points et *P* est le nombre total d'étapes selon lesquelles *p* est incrémenté de 0 à 2*π.*

3. Procédé selon l'une quelconque des revendications précédentes, dans lequel la face de sortie (12) de la fibre optique multimode plasmonique (10) comprend en outre des sources optiques nanométriques déposées sur la structure plasmonique (15), l'étape a) comprenant en outre
fournir un ensemble supplémentaire de composantes de modulation de phase à appliquer au champ lumineux d'entrée pénétrant dans la face d'entrée (11) de la fibre optique multimode plasmonique (10), chaque composante de modulation de phase de l'ensemble supplémentaire de composantes de modulation de phase provoquant une distribution d'intensité associée du champ électromagnétique non radiatif à une distance de la face de sortie (12) inférieure à la longueur d'onde d'excitation ;
dans lequel l'étape b) comprend en outre
déterminer une modulation de phase calculée supplémentaire à appliquer au champ lumineux d'entrée afin de produire une distribution d'intensité cible du champ électromagnétique non radiatif, ladite modulation de phase calculée supplémentaire étant définie comme une combinaison des composantes de modulation de phase supplémentaires;
dans lequel l'étape c) comprend en outre
appliquer la modulation de phase calculée supplémentaire à un faisceau laser pénétrant dans la face d'entrée (11) de la fibre optique multimode plasmonique (10).

4. Appareil de commande dynamique de l'état de couplage entre des modes guidés et des résonances plasmoniques dans une fibre optique multimode plasmonique (10), ladite fibre optique multimode plasmonique (10) comprenant une face d'entrée (11), une face de sortie (12) et une structure plasmonique (15) formée sur la face de sortie (12), l'appareil comprenant :
un dispositif de mise en forme de front d'onde (21) configuré pour moduler en phase le front d'onde d'un faisceau laser à longueur d'onde accordable,
un objectif de microscope (22) optiquement conjugué au dispositif de mise en forme de front d'onde (21) et configuré pour focaliser le front d'onde modulé sur la face d'entrée (11) de la fibre optique multimode plasmonique (10),
un agencement de détecteurs à résolution spatiale (31, 32) optiquement conjugué à la face de sortie (12) de la fibre optique multimode (10), ledit agencement de détecteurs comprenant un premier détecteur (31) configuré pour imager la distribution d'intensité du champ électromagnétique sur la face de sortie (12) et un second détecteur (32) configuré pour imager la réponse de champ lointain de la face de sortie (12), et
une unité de commande (50) configurée pour
a) stocker un ensemble de composantes de modulation de phase ${ϕ}_{interfere}^{{j}_{x} , {j}_{y} , p} \left({u}_{in}, {v}_{in}\right)$ à appliquer à un champ lumineux d'entrée pénétrant dans la face d'entrée (11) de la fibre optique multimode plasmonique (10), chaque composante de modulation de phase ${ϕ}_{scan}^{{j}_{x} , {j}_{y} , p} \left({u}_{in}, {v}_{in}\right)$ provoquant que le champ lumineux génère une distribution d'intensité de champ proche associée *NF^{jₓ,j_{y},p}*(*xₒᵤₜ, yₒᵤₜ*) du champ électromagnétique sur la structure plasmonique (15) et un motif radiatif angulaire associé *FF^{jₓ,j_{y},p}*(*uₒᵤₜ*, *vₒᵤₜ*) après la face de sortie de la fibre optique multimode plasmonique sur l'agencement de détecteurs à résolution spatiale (31, 32) ;
b) déterminer une modulation de phase calculée Φ(*uᵢₙ*, *vᵢₙ*) à appliquer au champ lumineux d'entrée afin de produire un couplage entre des modes guidés et des résonances plasmoniques, défini par une distribution d'intensité cible du champ électromagnétique sur la structure plasmonique et/ou un motif radiatif cible après la face de sortie de la fibre optique multimode plasmonique sur l'agencement de détecteurs à résolution spatiale (31, 32), ladite modulation de phase calculée étant définie comme une combinaison des composantes de modulation de phase ${ϕ}_{interfere}^{{j}_{x} , {j}_{y} , p} \left({u}_{in}, {v}_{in}\right)$, ladite combinaison des composantes de modulation de phase étant calculée sur la base des distributions d'intensité de champ proche *NF^{jₓ,j_{y},p}*(*xₒᵤₜ, yₒᵤₜ*) ou des images de champ lointain *FF^{jₓ,j_{y},p}*(*uₒᵤₜ, vₒᵤₜ*) associées aux composantes de modulation de phase ${ϕ}_{interfere}^{{j}_{x} , {j}_{y} , p} \left({u}_{in}, {v}_{in}\right)$ et à la distribution d'intensité cible et/ou au motif radiatif angulaire cible, lesdites distributions d'intensité de champ proche *NF^{jₓ,j_{y},p}*(*xₒᵤₜ, yₒᵤₜ*) ou images de champ lointain *FF^{jₓ,j_{y},p}*(*uₒᵤₜ, vₒᵤₜ*) étant analysées afin de calculer, pour chaque point (*jₓ, j_{y}*) d'un réseau de points de ladite face d'entrée (11), des déphasages $p = {p}_{opt}^{{j}_{x} , {j}_{y}}$ qui génèrent ladite distribution d'intensité cible ou ledit motif radiatif angulaire cible, sur un ensemble de pixels ciblés dans un plan image de la face de sortie (12) ou dans un plan de Fourier de la face de sortie (12), respectivement ; et
c) commander le dispositif de mise en forme de front d'onde (21) afin d'appliquer la modulation de phase calculée Φ(*uᵢₙ*, *vᵢₙ*) au faisceau laser, ledit faisceau laser ayant une longueur d'onde choisie pour correspondre à des longueurs d'onde résonantes spécifiques de la structure plasmonique (15) ;
dans lequel les distributions d'intensité de champ proche *NF^{jₓ,j_{y},p}*(*xₒᵤₜ, yₒᵤₜ*) ou les images de champ lointain *FF^{jₓ,j_{y},p}*(*uₒᵤₜ*, *vₒᵤₜ*) associées aux composantes de modulation de phase ${ϕ}_{interfere}^{{j}_{x} , {j}_{y} , p} \left({u}_{in}, {v}_{in}\right)$ sont déterminées dans une étape de mesure de phase du mode plasmonique, ladite étape de mesure de phase du mode plasmonique comprenant :
- faire pénétrer un faisceau de référence (*B_{ref}*) et un faisceau de balayage (*B_{scan}*) dans la face d'entrée (11) de la fibre optique multimode, dans lequel le faisceau de référence (*B_{ref}*) présente une partition de modulation de phase *ϕ_{ref}*(*uᵢₙ, vᵢₙ*),
où (*uᵢₙ*, *vᵢₙ*) sont des coordonnées dans le plan de Fourier de la face d'entrée (11), et le faisceau de balayage (*B_{scan}*) impacte séquentiellement le réseau de points sur la face d'entrée (11) et présente une partition de modulation de phase ${ϕ}_{scan}^{{j}_{x} , {j}_{y} , p} \left({u}_{in}, {v}_{in}\right)$, où (*jₓ, j_{y}*) sont des indices de réseau et *p* est un déphasage discrétisé variant de 0 à 2*π,* dans lequel le faisceau de référence (*B_{ref}*) et le faisceau de balayage (*B_{scan}*) se propagent à travers la fibre optique multimode (10), interfèrent l'un avec l'autre et excitent des modes plasmoniques sur la face de sortie (12), générant ainsi les distributions d'intensité de champ *NF^{jₓ,j_{y},p}*(*xₒᵤₜ, yₒᵤₜ*) ou les images de champ lointain *FF^{jₓ,j_{y},p}*(*uₒᵤₜ, vₒᵤₜ*) associées aux composantes de modulation de phase, respectivement dans le plan image de la face de sortie (12) et dans le plan de Fourier de la face de sortie (12).

5. Appareil selon la revendication 4, dans lequel la face de sortie (12) de la fibre optique multimode plasmonique (10) comprend en outre des sources optiques nanométriques déposées sur la structure plasmonique (15), dans lequel l'unité de commande (50) est en outre configurée pour
- stocker un ensemble supplémentaire de composantes de modulation de phase à appliquer au champ lumineux d'entrée pénétrant dans la face d'entrée (11) de la fibre optique multimode plasmonique (10), chaque composante de modulation de phase de l'ensemble supplémentaire de composantes de modulation de phase provoquant une distribution d'intensité associée du champ électromagnétique non radiatif à une distance de la face de sortie (12) inférieure à la longueur d'onde d'excitation ;
- déterminer une modulation de phase calculée supplémentaire à appliquer au champ lumineux d'entrée afin de produire une distribution d'intensité cible du champ électromagnétique non radiatif, ladite modulation de phase calculée supplémentaire étant définie comme une combinaison des composantes de modulation de phase supplémentaires ; et
- commander le dispositif de mise en forme de front d'onde (21) afin d'appliquer la modulation de phase calculée supplémentaire à un faisceau laser pénétrant dans la face d'entrée (11) de la fibre optique multimode plasmonique (10).
